(19) Europäisches Patentamt
European Patent Office
Office européen des brevets

(11) EP 3 637 781 A1

(12) # EUROPEAN PATENT APPLICATION
published in accordance with Art. 153(4) EPC

(43) Date of publication:
**15.04.2020 Bulletin 2020/16**

(21) Application number: **18824050.1**

(22) Date of filing: **20.04.2018**

(51) Int Cl.:
***H04N 19/59*** *(2014.01)*

(86) International application number:
**PCT/CN2018/083823**

(87) International publication number:
**WO 2019/001108 (03.01.2019 Gazette 2019/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2017 CN 201710525977**

(71) Applicant: **Huawei Technologies Co., Ltd.**
**Longgang District**
**Shenzhen, Guangdong 518129 (CN)**

(72) Inventors:
- **XU, Wei**
  **Shenzhen**
  **Guangdong 518129 (CN)**
- **ZHOU, Li**
  **Shenzhen**
  **Guangdong 518129 (CN)**

(74) Representative: **Gill Jennings & Every LLP**
**MTH**
**The Broadgate Tower**
**20 Primrose Street**
**London EC2A 2ES (GB)**

(54) **VIDEO PROCESSING METHOD AND APPARATUS**

(57) Embodiments of this application provide a video processing method, including: receiving a first video slice, where a resolution of the first video slice is an initial resolution; obtaining an adaptive sampling resolution of the first video slice based on a model parameter of a machine learning model by using the machine learning model; sampling the first video slice based on the adaptive sampling resolution, to obtain a second video slice; obtaining an auxiliary parameter based on the first video slice and the second video slice, where the auxiliary parameter comprises the adaptive sampling resolution of the first video slice; performing encoding processing on the second video slice and the auxiliary parameter, to form a third video slice; and sending the third video slice to a video decoding apparatus. In this way, a balance is achieved between bandwidth consumption and high quality during high-quality video transmission.

Video encoding apparatus 201
Video decoding apparatus 203
Transceiver 2011
Machine learning module 2012
Sampling module 2013
Auxiliary parameter generation module 2014
Encoder 2015
Storage apparatus 202
Decoder 2032
Reconstruction unit 2033
601: Sample video slice and classification result
601: Train a model parameter
602: Original video slice
602: Predict an adaptive sampling resolution
603: Adaptive sampling resolution
603: Downsampling processing
604: Downsampled video slice
604: Obtain an auxiliary parameter
605: Send the downsampled video slice and the auxiliary parameter
605: Encode the video slice
TO FIG. 6B

FIG. 6A

EP 3 637 781 A1

CONT. FROM FIG. 6A
CONT. FROM FIG. 6A
CONT. FROM FIG. 6A
CONT. FROM FIG. 6A
606: Send an encoded video slice
606: Store the encoded video slice
606: Send the encoded video slice
607: Perform decoding to obtain the downsampled video slice and the auxiliary parameter
607: Send the downsampled video slice and the auxiliary parameter
608: Reconstruct a video slice with an initial resolution

FIG. 6B

## Description

This application claims priority to Chinese Patent Application No. 201710525977.9 filed with the Chinese Patent Office on June 30, 2017 and entitled "VIDEO PROCESSING METHOD AND APPARATUS", which is incorporated herein by reference in its entirety.

## TECHNICAL FIELD

This application relates to the field of video technologies, and in particular, to a video processing method and an apparatus.

## BACKGROUND

With development of 4K (a resolution of 4096×2160) ultra-high-definition video services, a requirement on a transmission bandwidth becomes increasingly high, and conventional universal video codec technologies can no longer ensure transmission of a high-quality 4K video in an existing bandwidth environment. A plurality of content providers have already launched 4K video services. During transmission of an ultra-high-definition video, a bandwidth is under great pressure. For example, using an actual 4K ultra-high-definition video service as an example, currently in the industry, the H.264 encoding standard is mainly used, a bit rate needs to reach 50 Mbit/s or more to ensure relatively good 4KP60 visual experience, and a corresponding network bandwidth needs to be at least 75 Mbit/s. After the H.265 encoding standard is popularized, the 4KP60 bit rate may be reduced to 30 Mbit/s while service experience is ensured, and the corresponding network bandwidth needs to be at least 45 Mbit/s. However, due to high bandwidth and CDN costs, current bandwidth statuses of fixed access networks in China cannot meet the 4K bandwidth requirements, and even a failure in video transmission or excessively slow video transmission may occur. This may further cause excessive bandwidth load, leading to a breakdown of a transmission network.

## SUMMARY

Embodiments of this application provide a video processing method and an apparatus, so that high-quality video content can be transmitted in a transmission network with a limited bandwidth and a receive end can reconstruct the high-quality video content, thereby achieving a balance between reducing transmission burden and ensuring video quality in a technical solution of video processing.

According to a first aspect, an embodiment of this application provides a video processing method, where the method is applied to a video encoding apparatus and includes the following steps: The video encoding apparatus receives a first video slice, where a resolution of the first video slice is an initial resolution. Then the video encoding apparatus may obtain an adaptive sampling resolution of the first video slice based on a model parameter of a machine learning model by using the machine learning model. There may be a plurality of machine learning models, such as a convolutional neural network. In this way, the video encoding apparatus may obtain an optimal adaptive sampling resolution for each video slice. The video encoding apparatus may further sample the first video slice based on the adaptive sampling resolution, to obtain a second video slice. In this way, for different types of video slices, different adaptive sampling resolution samples may be obtained to obtain the second video slice. Through comparison of the first video slice and the second video slice, an auxiliary parameter may be obtained. The auxiliary parameter includes the adaptive sampling resolution of the first video slice. Encoding processing is performed on the second video slice and the auxiliary parameter, to form a third video slice. Usually, the adaptive sampling resolution is lower than the initial resolution. A resolution of the third video slice is a relatively low resolution, and transmission efficiency of high-quality video content can be satisfied. In addition, different types of video slices are sampled by using different adaptive sampling resolutions, and resolutions of third video slices eventually obtained are also different. Therefore, for different types of video slices, video content may be encoded by using different resolutions, so that bandwidth consumption and high video quality during transmission can be optimally balanced.

In a possible design, that the video encoding apparatus predicts an adaptive sampling resolution of the first video slice based on a model parameter of a machine learning model by using the machine learning model specifically includes: training the first video slice based on the model parameter of the machine learning model by using the machine learning model, to obtain a trained classification result, where the classification result is the adaptive sampling resolution of the first video slice; or training the first video slice based on the model parameter of the machine learning model by using the machine learning model, to obtain a trained classification result, where the classification result is a predicted video slice type, and determining the adaptive sampling resolution of the first video slice based on the video slice type. The video encoding apparatus can obtain, through machine learning, a sampling resolution that matches the video slice type, and the sampling resolution obtained in this manner may be optimal.

In a possible design, that the video encoding apparatus obtains an auxiliary parameter based on the first video slice and the second video slice specifically includes: restoring a resolution of the second video slice to the initial resolution, to obtain a fourth video slice; performing a substraction operation between an image of the fourth video slice and an image of the first video slice, to obtain a subtraction difference, where the difference is a residual image; and performing encoding processing on each of the residual images, to obtain auxiliary information of each of the residual images, where the auxiliary parameter further includes auxiliary information of the residual images. The video encoding apparatus may obtain the auxiliary parameter by determining a difference between a sampled video slice and a received initial video slice. The auxiliary parameter may help a video decoding apparatus more accurately reconstruct a video slice.

According to a second aspect, an embodiment of this application provides a video processing method, where the method is applied to a video decoding apparatus, and the method specifically includes the following steps: The video decoding apparatus receives a third video slice. The third video slice is a video slice obtained through encoding by a video encoding apparatus. The third video slice includes an adaptive sampling resolution. The video decoding apparatus decodes the third video slice, to obtain a fifth video slice and an auxiliary parameter, where a resolution of the fifth video slice is the adaptive sampling resolution, the auxiliary parameter includes the adaptive sampling resolution, and the fifth video slice may be a sampled second video slice; and reconstructs the fifth video slice based on the auxiliary parameter, to obtain a sixth video slice, where a resolution of the sixth video slice is an initial resolution.

According to a third aspect, an embodiment of the present invention provides a video encoding apparatus. The video encoding apparatus has a function of the video encoding apparatus in the foregoing method embodiment. The function may be implemented by hardware, or by hardware executing corresponding software. The hardware or software includes one or more modules corresponding to the foregoing function.

According to a fourth aspect, an embodiment of the present invention provides a video decoding apparatus. The video decoding apparatus has a function of the video decoding apparatus in the foregoing method embodiment. The function may be implemented by hardware, or by hardware executing corresponding software. The hardware or software includes one or more modules corresponding to the foregoing function.

According to a fifth aspect, an embodiment of the present invention provides a video encoding apparatus, including a processor, a memory, a bus, and a communications interface. The memory is configured to store a computer executable instruction. The processor is connected to the memory by using the bus. When the video encoding apparatus operates, the processor executes the computer executable instruction stored in the memory, so that the video encoding apparatus performs the video processing method according to any implementation of the first aspect.

According to a sixth aspect, an embodiment of the present invention provides a video decoding apparatus, including a processor, a memory, a bus, and a communications interface. The memory is configured to store a computer executable instruction. The processor is connected to the memory by using the bus. When the video decoding apparatus operates, the processor executes the computer executable instruction stored in the memory, so that the video decoding apparatus performs the video processing method according to any implementation of the second aspect.

According to a seventh aspect, an embodiment of the present invention provides a system for implementing video processing, where the system includes the video encoding apparatus and the video decoding apparatus in the foregoing method embodiments or apparatus embodiments.

According to an eighth aspect, an embodiment of the present invention provides a computer storage medium, configured to store a computer software instruction to be used by the foregoing video encoding apparatus or video decoding apparatus. The computer software instruction includes a program designed for the video encoding apparatus and/or the video decoding apparatus according to the foregoing aspects.

According to a ninth aspect, an embodiment of the present invention provides a computer program product. The computer program product includes a computer software instruction. The computer software instruction may be loaded by using a processor, to implement a procedure in the video processing method according to any implementation of the first aspect.

In addition, for technical effects of any design in the third aspect to the ninth aspect, reference can be made to technical effects of different designs in the first aspect or the second aspect, and details are not described herein again.

These aspects or other aspects of the present invention are more concise and more comprehensive in descriptions of the following embodiments.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic structural diagram of a convolutional neural network according to an embodiment of the present invention;

FIG. 2 is a schematic structural diagram of a video processing system according to an embodiment of the present invention;

FIG. 3 is a schematic structural diagram of a video encoding apparatus according to an embodiment of the present invention;

FIG. 4 is a schematic structural diagram of a video decoding apparatus according to an embodiment of the present invention;

FIG. 5 is a schematic structural diagram of a computer device according to an embodiment of the present invention; and

FIG. 6A and FIG. 6B are a flowchart of a video processing method according to an embodiment of the present invention.

## DESCRIPTION OF EMBODIMENTS

To make the objectives, technical solutions, and beneficial advantages of this application clearer and more comprehensible, the following further describes this application in detail with reference to the accompanying drawings and embodiments. It should be understood that the specific embodiments described herein are merely used to explain this application but are not intended to limit this application.

To describe the technical solutions of the embodiments of the present invention more conveniently and more easily, technical concepts, methods, or algorithms that may be used in subsequent technical solutions are described first.

A convolutional neural network (Convolutional Neural Network, CNN) is an efficient neural network-based identification method. The CNN is usually used for image feature extraction to obtain an eigenvector, and achieve a classification effect by using a classifier. The CNN may usually include a convolutional layer, a pooling layer, a fully connected layer, and a classifier, which are separately described below.

1. Convolutional layer

In a convolutional layer of the CNN, a feature graph of an upper layer is convolved with a convolution kernel, the convolution operations are combined, and then an output feature graph may be obtained by using an activation function. A mathematical expression of the output feature graph may be:

$$x_j^l = f(\sum_{i \in M_i} x_i^{l-1} * w_{ij}^l + b_j^l) \quad (1)$$

where $x_j^l$ represents a $j^{th}$ feature graph of an $l^{th}$ layer, $f(.)$ represents the activation function, $M_i$ represents a set of selected feature graphs of an $(l\text{-}1)^{th}$ layer, $b_j^l$ represents a bias corresponding to the $j^{th}$ feature graph, $w_{ij}^l$ represents a convolution kernel on a connection between the $j^{th}$ feature graph of the $l^{th}$ layer and an $i^{th}$ feature graph of the $(l\text{-}1)^{th}$ layer, and "*" represents a convolution operation. The activation function may be a ReLU, and a mathematical expression of the activation function may be:

$$f(x) = \max(0, x) \quad (2)$$

For easier understanding, a specific example is provided below to describe an operation process of the convolution layer. Assuming that the $i^{th}$ feature graph of the $(l\text{-}1)^{th}$ layer is:

$$x_i^{l-1} = \begin{bmatrix} 1 & 2 & 3 \\ 4 & 5 & 6 \\ 7 & 8 & 9 \end{bmatrix} \quad (3),$$

and

the convolution kernel $w_{ij}^l$ on the connection between the $j^{th}$ feature graph of the $l^{th}$ layer and the $i^{th}$ feature graph of the ($l$-1)$^{th}$ layer is:

$$w_{ij}^{l} = \begin{bmatrix} 1 & 2 \\ 3 & 4 \end{bmatrix} \quad (4),$$

a result of convolving $w_{ij}^{l}$ with $x_{i}^{l-1}$ is to make $w_{ij}^{l}$ slide on $x_{i}^{l-1}$, in other words, an operation of "summation of products of corresponding elements" on all 2×2 consecutive submatrices of $w_{ij}^{l}$ and $x_{i}^{l-1}$. Therefore, a result $x_{i}^{l-1} * w_{ij}^{l}$ in this case is:

$$x_{i}^{l-1} * w_{ij}^{l} = \begin{bmatrix} 37 & 47 \\ 67 & 77 \end{bmatrix} \quad (5)$$

Assuming that the set $M_j$ of the selected feature graphs includes only one feature graph, and a value of a bias $b_{j}^{l}$ corresponding to the $j^{th}$ feature graph is 1, a finally output $j^{th}$ feature graph $x_{j}^{l}$ of the $l^{th}$ layer is:

$$x_{j}^{l} = f(\sum_{i \in M_i} x_{i}^{l-1} * w_{ij}^{l} + b_{j}^{l}) = \max(0, \sum_{i \in M_i} x_{i}^{l-1} * w_{ij}^{l} + 1) = \begin{bmatrix} 38 & 48 \\ 68 & 78 \end{bmatrix} \quad (6)$$

Conclusion: Parameters of the convolutional layer are a weight $w_{ij}$ and a bias parameter $b_j$ of the convolution kernel. The weight $w_{ij}$ of the convolution kernel is initialized with some different small random numbers, for example, different random numbers in a range [0, 0.1].

2. Pooling layer

The pooling layer may also be referred to as a sampling (Sub-sampling) layer. In the CNN, if there are $N$ input graphs, there are $N$ output graphs, but each output graph may become smaller. A mathematical expression of a pooling layer operation may be:

$$x_{j}^{l} = \beta_{j}^{l} down(x_{j}^{l-1}) + b_{j}^{l} \quad (7)$$

where $x_{j}^{l}$ represents a $j^{th}$ feature graph of an $l^{th}$ layer, and *down*(.) represents a pooling operation, to be specific, an average value of pixels in an $n \times n$ small window is used to replace a pixel value of the $n \times n$ small window (average pooling), or a maximum pixel value in an $n \times n$ small window is used to replace a pixel value of the $n \times n$ small window (max pooling). $\beta_{j}^{l}$ is a weighting coefficient corresponding to the $j^{th}$ feature graph of the $l^{th}$ layer, and $b_{j}^{l}$ is a bias corresponding to the $j^{th}$ feature graph of the $l^{th}$ layer.

For easier understanding, a specific example is provided below to describe an operation process of the pooling layer. It is assumed that a $j^{th}$ feature graph $x_{j}^{l-1}$ of an ($l$-1)$^{th}$ layer is:

$$x_j^{l-1} = \begin{bmatrix} 1 & 2 & 3 & 4 \\ 1 & 2 & 3 & 4 \\ 5 & 6 & 7 & 8 \\ 5 & 6 & 7 & 8 \\ 9 & 0 & 1 & 2 \\ 9 & 0 & 1 & 2 \end{bmatrix} \quad (8)$$

If a size of a pooling window is 2×2, $x_j^{l-1}$ is segmented into six blocks of non-intersecting 2×2 small matrices based on the size of the pooling window, an average operation after a summation operation is performed on all elements in each of the six blocks, and this process is referred to as average pooling. If summation is performed on all the elements in each of the six blocks, and obtaining a maximum value among sums of the six blocks, the process is referred to as max pooling. Pixel values after the average pooling are:

$$down(x_j^{l-1}) = \begin{bmatrix} 1.5 & 3.5 \\ 5.5 & 7.5 \\ 4.5 & 1.5 \end{bmatrix} \quad (9)$$

Pixel values after the max pooling are:

$$down(x_j^{l-1}) = \begin{bmatrix} 2 & 4 \\ 6 & 8 \\ 9 & 2 \end{bmatrix} \quad (10)$$

If max pooling is used, $\beta_j^l = 1$, and $b_j^l = 1$, = 1, the $j^{th}$ feature graph $x_j^l$ of the $l^{th}$ layer is:

$$x_j^l = \beta_j^l down(x_j^{l-1}) + b_j^l = down(x_j^{l-1}) + 1 = \begin{bmatrix} 3 & 5 \\ 7 & 9 \\ 10 & 3 \end{bmatrix} \quad (11)$$

In conclusion, parameters of the pooling layer are a feature graph weight $\beta_j$ and a corresponding bias parameter $b_j$.

3. Fully connected layer

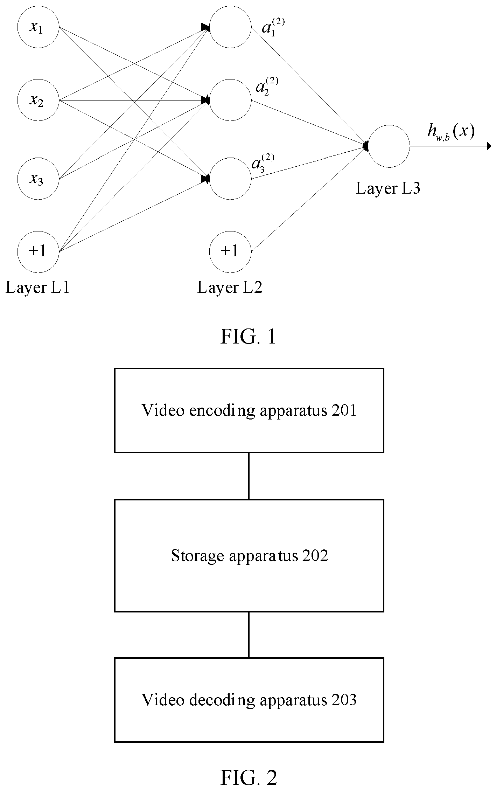

The fully connected layer means all nodes of a layer are connected to all nodes in a next layer. There is a weighting parameter between every two connected nodes. FIG. 1 shows a simple fully connected layer, a layer L1 includes three normal nodes and one bias node, and a circle marked "+1" is referred to as the bias node. All normal nodes in a layer L2 are connected to all nodes in the layer L1, and there is a weighting parameter between every two connected nodes. An output of the layer L2 is used as an example. A mathematical expression of an output $a_1^{(2)}$ of a first node in the layer L2 may be:

$$a_1^{(2)} = f(w_{11}^{(1)} x_1 + w_{12}^{(1)} x_2 + w_{13}^{(1)} x_3 + b_1^{(1)}) \quad (12)$$

where $w_{11}^{(1)}$ is a weighting parameter between a first node in the layer L1 and the first node in the layer L2, $w_{12}^{(1)}$ is a weighting parameter between a second node in the layer L1 and the first node in the layer L2, $w_{13}^{(1)}$ is a weighting parameter between a third node in the layer L1 and the first node in the layer L2, and $b_1^1$ is a weighting parameter between a second node in the layer L1 and the first node in the layer L2 layer. f(.) represents an activation function, and similar to the convolutional layer, a ReLU is used. By analogy, outputs $a_2^{(2)}$ and $a_3^{(2)}$ of a second node and a third node in the layer L2 layer may be obtained:

$$\begin{aligned} a_2^{(2)} &= f(w_{21}^{(1)}x_1 + w_{22}^{(1)}x_2 + w_{23}^{(1)}x_3 + b_2^{(1)}) \\ a_3^{(2)} &= f(w_{31}^{(1)}x_1 + w_{32}^{(1)}x_2 + w_{33}^{(1)}x_3 + b_3^{(1)}) \end{aligned} \quad (13)$$

In other words, a mathematical expression of an input of a layer L3 thereof is:

$$h_{w,b}(x) = a_1^{(3)} = f(w_{11}^{(2)}a_1^{(2)} + w_{12}^{(2)}a_2^{(2)} + w_{13}^{(2)}a_3^{(2)} + b_1^{(2)}) \quad (14)$$

Assuming that $W^{l-1}$ is used to represent a set of weighting parameters between an $l^{th}$ layer and an $(l-1)^{th}$ layer, and $b^{l-1}$ is used to represent a set of bias parameters between the $l^{th}$ layer and the $(l-1)^{th}$ layer, an output of an $l^{th}$ fully connected layer may be simply represented as:

$$X^l = W^{l-1}X^{l-1} + b^{l-1} \quad (15)$$

In conclusion, parameters of the fully connected layer are a weighting parameter set $W$ and a bias parameter $b$ .

4. Classifier

The CNN is usually connected to the classifier (which may also be referred to as a softmax classifier or a softmax layer) to achieve a classification effect. However, the softmax includes no parameter, but only normalizes an output of a last fully connected layer, and maps a result to a range of [0, 1]. Assuming that there are n different adaptive sampling resolutions in total, a node quantity of the last fully connected layer is n, and output values thereof are separately $x_1$, ..., and $x_n$, an operation performed on a softmax layer is:

$$x_i = x_i - \max(x_1, ..., x_n) \quad (16)$$

$$p_i = e^{x_i} / \sum_{j=1}^{n} e^{x_j} \quad (17)$$

where a maximum subscript $i$ of a value $p_i$ identifies a type to which a sample belongs.

For easier understanding, a specific example is used below to describe an operation process of the softmax layer. It is assumed that there are six different sampling resolutions in total, a node quantity of the last fully connected layer is 6, and output values of a to-be-test sample in the last fully connected layer are [-1.5, 4, 6, 3, 1, 2.4]. In this case, after a normalization operation of the softmax layer, [-7.5, -2, 0, -3, -5,-3.6] are obtained. Then the result is mapped to the range of [0, 1], to obtain [0.001, 0.111, 0.820, 0.041, 0.006, 0.022], where a value of p3 is the largest. Therefore, the third sampling resolution is used as a sampling resolution of the sample.

Subsequently, a video processing system provided in the embodiments of the present invention is described. As shown in FIG. 2, the video processing system in the present invention includes a video encoding apparatus 201, a storage apparatus 202, and a video decoding apparatus 203. The system is mainly applied to a solution of efficiently transmitting high-quality video content, in particular, to a scenario in which transmission channel bandwidth consumption is not high. Usually, the video encoding apparatus 201 is a server-side device, and the video decoding apparatus 203 is a terminal-side device. The server-side device and the terminal-side device communicate and transmit video content through a network. The video content may be specifically a video stream or a video file. Each piece of video content may include a plurality of video slices. The video encoding apparatus 201 performs machine learning to obtain an adaptive resolution or a sample. The video decoding apparatus processes video slices one by one in a reconstruction process. During encoding, the video encoding apparatus 201 may encode one video slice, or may centrally encode a plurality of video slices or all video slices included in the video content. However, a process of encoding a plurality of video slices or all video slices included in the video content is the same as a process of encoding one video slice. Therefore, in this embodiment of the present invention, one video slice is used as an example for describing steps or functions of the video encoding apparatus 201 or the video decoding apparatus 203. The video encoding apparatus 201 receives a first video slice, where the first video slice herein may also be referred to as an original video slice, and the original video slice is a video slice received by the video encoding apparatus, and performs a preprocessing operation on the first video slice. A resolution of the first video slice is an initial resolution. The initial resolution herein may also be referred to as an original resolution, and is a resolution of the video slice received by the video encoding apparatus. The preprocessing operation may include obtaining an adaptive sampling resolution through machine learning. The adaptive sampling resolution is lower than the initial resolution. An adaptive sampling resolution of each video slice is an optimal sampling resolution applicable to the video slice. The preprocessing operation may further include sampling the first video slice based on the adaptive sampling resolution, to obtain a second video slice, and comparing the second video slice with the first video slice, to obtain an auxiliary parameter. After performing the preprocessing operation, the video encoding apparatus 201 obtains the second video slice and the corresponding auxiliary parameter. The second video slice is a video slice obtained by the video encoding apparatus by sampling the first video slice, and in descriptions of subsequent embodiments, is also referred to as a sampled video slice. When obtaining the auxiliary parameter, the video encoding apparatus 201 specifically performs the following processing: restoring a resolution of the second video slice to the initial resolution. In this way, a fourth video slice may be obtained. The fourth video slice is a video slice obtained by restoring the second video slice to the initial resolution, and in descriptions of subsequent embodiments, is also referred to as a restored video slice. The video encoding apparatus 201 then performs a substraction operation between an image of the fourth video slice and an image of the first video slice, to obtain a subtraction difference, where the difference is a residual image. Next, the video encoding apparatus 201 performs encoding processing on each residual image, to obtain auxiliary information of each residual image, where the auxiliary parameter further includes auxiliary information of all the residual images. After obtaining the auxiliary parameter, the video encoding apparatus 201 may perform encoding processing on the second video slice and the corresponding parameter, to form a third video slice. The third video slice is a video slice obtained after the video encoding apparatus encodes the second video slice, and in descriptions of subsequent embodiments, may also be referred to as an encoded video slice. The video encoding apparatus 201 sends the third video slice to the video decoding apparatus 203 or to the storage apparatus 202. The storage apparatus 202 may be an on-demand storage apparatus, configured to store the third video slice. When obtaining the third video slice from the video encoding apparatus 201 or the storage apparatus 202, the video decoding apparatus 203 at a peer end may decode the third video slice, to obtain the second video slice and the auxiliary parameter that includes the adaptive sampling resolution. Then, the video decoding apparatus 203 may perform video reconstruction on the second video slice based on the second video slice and the auxiliary parameter that includes the adaptive sampling resolution, to obtain a sixth video slice. The sixth video slice is a video slice obtained after the video encoding apparatus performs video reconstruction on the second video slice, and in descriptions of subsequent embodiments, is also referred to as a reconstructed video slice. A resolution of the sixth video slice is the initial resolution.

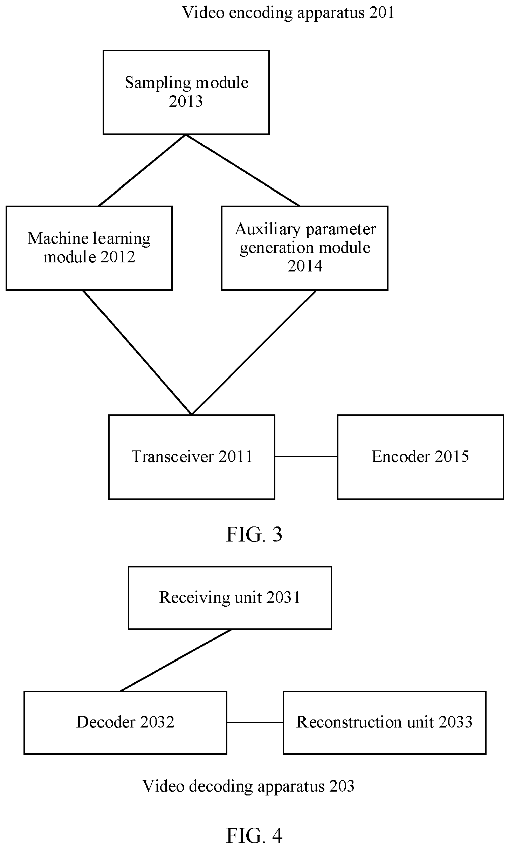

FIG. 3 shows an example of the video encoding apparatus 201 provided in this embodiment of the present invention. The video encoding apparatus includes a transceiver 2011, a machine learning module 2012, a sampling module 2013, an auxiliary parameter generation module 2014, and an encoder 2015. The transceiver 2011 is configured to receive a first video slice, where a resolution of the first video slice is an initial resolution. Usually, the video encoding apparatus receives initial video content. The initial video content includes a plurality of first video slices. The video encoding apparatus or the video decoding apparatus in this embodiment of the present invention is described by using an example in which one video slice is processed. In other words, the transceiver 2011 herein may also be configured to receive the initial video content. The machine learning module 2012 may be specifically a CNN module, a neural network module, or another machine learning module. This is not limited herein. The machine learning module 2012 is specifically configured to obtain an adaptive sampling resolution of the first video slice based on a model parameter of a machine learning model by using the machine learning model. The adaptive sampling resolution is lower than the initial resolution. The model parameter herein is usually a model parameter trained by the machine learning module. There may be a plurality of machine learning models used by the machine learning module. For example, if a CNN model is used, the machine learning module is a CNN module, or if a neural network model is used, the machine learning module is a neural network module. The sampling module 2013 is configured to sample the first video slice based on the adaptive sampling resolution, to obtain a second video slice. The auxiliary parameter generation module 2014 is configured to obtain an auxiliary parameter based on the first video slice and the second video slice, where the auxiliary parameter includes the adaptive sampling resolution of the first video slice. The encoder 2015 is configured to perform encoding processing on the second video slice and the auxiliary parameter, to form a third video slice. The transceiver 2011 is further configured to send the third video slice to a video decoding apparatus. The transceiver 2011, the machine learning module 2012, the sampling module 2013, the auxiliary parameter generation module 2014, and the encoder 2015 may each be an independent apparatus. In this case, the video encoding apparatus 201 integrates or combines the five independent apparatuses. In this case, the video encoding apparatus 201 may be a logic device, or may be a physical device. The transceiver 2011, the machine learning module 2012, the sampling module 2013, the auxiliary parameter generation module 2014, and the encoder 2015 may alternatively not be independent devices, but five internal structural units of the video encoding apparatus 201, and the video encoding apparatus 201 is a physical device.

FIG. 4 shows an example of a video decoding apparatus 203 provided in this embodiment of the present invention. The video decoding apparatus 203 includes: a receiving unit 2031, configured to receive a third video slice; a decoder 2032, configured to decode the third video slice, to obtain a fifth video slice and an auxiliary parameter, where a resolution of the fifth video slice is an adaptive sampling resolution, and the auxiliary parameter includes the adaptive sampling resolution; and a reconstruction unit 2033, configured to reconstruct the fifth video slice based on the auxiliary parameter, to obtain a sixth video slice, where a resolution of the sixth video slice is an initial resolution, and the initial resolution is higher than the adaptive sampling resolution. During specific implementation, the reconstruction unit may be configured to: perform decoding processing on the auxiliary information of each residual image, to restore each residual image; obtain the initial resolution based on each residual image; and reconstruct each image of the fifth video slice as an image with the initial resolution based on each residual image, the initial resolution, and the adaptive sampling resolution through interpolation calculation.

The encoder 2015 and the decoder 2032 may operate based on a video compression standard (for example, a high efficiency video codec H.265 standard), and may conform to an HEVC test model (HM). Text descriptions ITU-T H.265 (V3) (04/2015) of the H.265 standard was released on April 29, 2015, and can be downloaded from http://handle.itu.int/11.1002/1000/12455. All content of the file is incorporated herein by reference.

Alternatively, the encoder 2015 and the decoder 2032 may operate based on other proprietary or industry standards, including ITU-T H.261, ISO/IEC MPEG-1 Visual, ITU-T H.262, or ISO/IEC MPEG-2 Visual, ITU-T H.263, ISO/IEC MPEG-4 Visual, and ITU-T H.264 (also referred to as ISO/IEC MPEG-4 AVC), including scalable video codec (SVC) and multi-view video codec (MVC) extensions. It should be understood that the technology in the present invention is not limited to any particular encoding and decoding standard or technology.

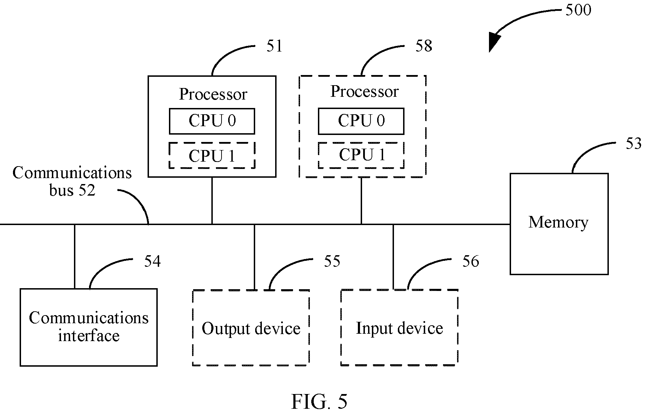

FIG. 5 is a schematic diagram of a computer device according to an embodiment of the present invention. The computer device 500 includes at least one processor 51, a communications bus 52, a memory 53, and at least one communications interface 54.

The processor 51 may be a general-purpose central processing unit (CPU), a microprocessor, an application-specific integrated circuit (application-specific integrated circuit, ASIC), or one or more integrated circuits that are configured to control execution of a program in a solution of the present invention.

The communications bus 52 may include a path for transmitting information between the foregoing components. The communications interface 54 uses any type of apparatus such as a transceiver to communicate with another device or a communications network, such as an Ethernet, a radio access network (RAN), or a wireless local area network (Wireless Local Area Networks, WLAN).

The memory 53 may be a read-only memory (read-only memory, ROM) or another type of static storage device that can store static information and an instruction, a random access memory (random access memory, RAM), or another type of dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM), another optical disc storage, a disc storage (including a compact disc, a laser disc, an optical disc, a digital versatile disc, a Blu-ray disc, or the like), a magnetic disk storage medium, another magnetic disk storage device, or any other medium that can be accessed by a computer and that can be configured to carry or store expected program code in an instruction or data structure form, but this application is not limited thereto. The memory may exist independently and is connected to the processor by using the bus. Alternatively, the memory may be integrated with the processor.

The memory 53 is configured to store application program code for performing the solution of the present invention, and the processor 51 controls the performing. The processor 51 is configured to execute the application program code stored in the memory 53.

In a specific implementation, in an embodiment, the processor 51 may include one or more CPUs, for example, a CPU 0 and a CPU 1 in FIG. 5.

In a specific implementation, in an embodiment, the computer device 500 may include a plurality of processors, for example, a processor 51 and a processor 58 in FIG. 5. Each of these processors may be a single-core (single-CPU) processor, or may be a multi-core (multi-CPU) processor. The processors herein may refer to one or more devices, circuits, and/or processing cores configured to process data (for example, a computer program instruction).

During specific implementation, in an embodiment, the computer device 500 may further include an output device 55 and an input device 56. The output device 55 communicates with the processor 51, and may display information in various manners. For example, the output device 55 may be a liquid crystal display (liquid crystal display, LCD), a light emitting diode (light emitting diode, LED) display device, a cathode ray tube (cathode ray tube, CRT) display device, or a projector (projector). The input device 56 communicates with the processor 51, and may receive an input of a user in various manners. For example, the input device 56 may be a mouse, a keyboard, a touchscreen device, or a sensing device.

The computer device 500 may be a general-purpose computer device or a dedicated computer device. During specific implementation, the computer device 500 may be a desktop computer, a portable computer, a network server, a palmtop computer (Personal Digital Assistant, PDA), a mobile phone, a tablet computer, a wireless terminal device, a communications device, an embedded device, or a device having a structure similar to that in FIG. 53. In this embodiment of the present invention, a type of the computer device 500 is not limited.

For example, in this embodiment, the video encoding apparatus 201 or the video decoding apparatus 203 is presented in a form of a function unit. The "unit" herein may refer to an application-specific integrated circuit (application-specific integrated circuit, ASIC), a circuit, a processor executing one or more software or firmware programs, a memory, an integrated logic circuit, and/or another device that can provide the foregoing function. For example, the video encoding apparatus in FIG. 3 may be the device shown in FIG. 5, and the memory of the video encoding apparatus stores one or more software modules. The video encoding apparatus may use the processor and the program code in the memory to implement the software module and implement adaptive sampling and encoding processing of a video slice.

Alternatively, the video decoding apparatus in FIG. 4 may be the device shown in FIG. 5, and the memory of the video decoding apparatus stores one or more software modules. The video decoding apparatus may use the processor and the program code in the memory to implement the software module and implement reconstruction of a video slice.

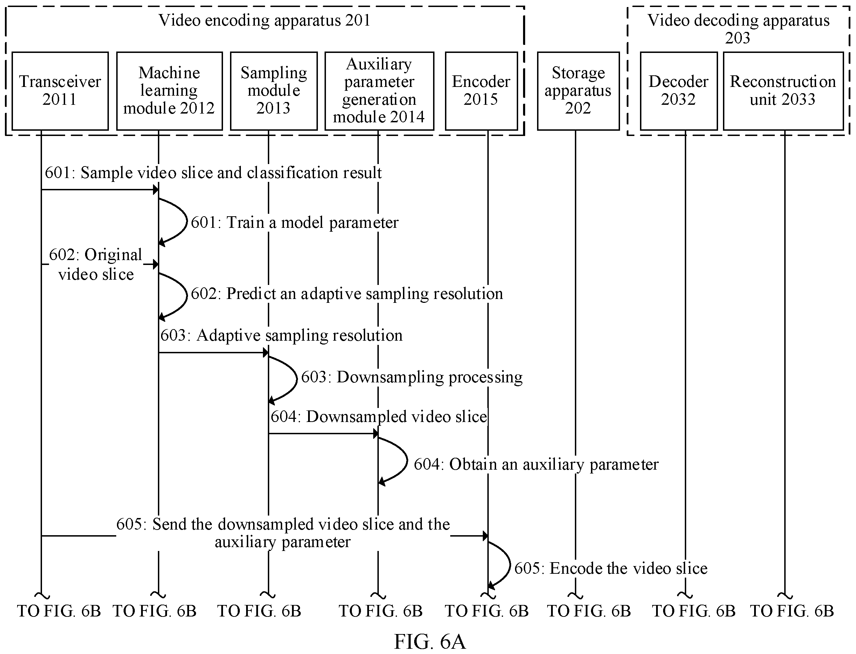

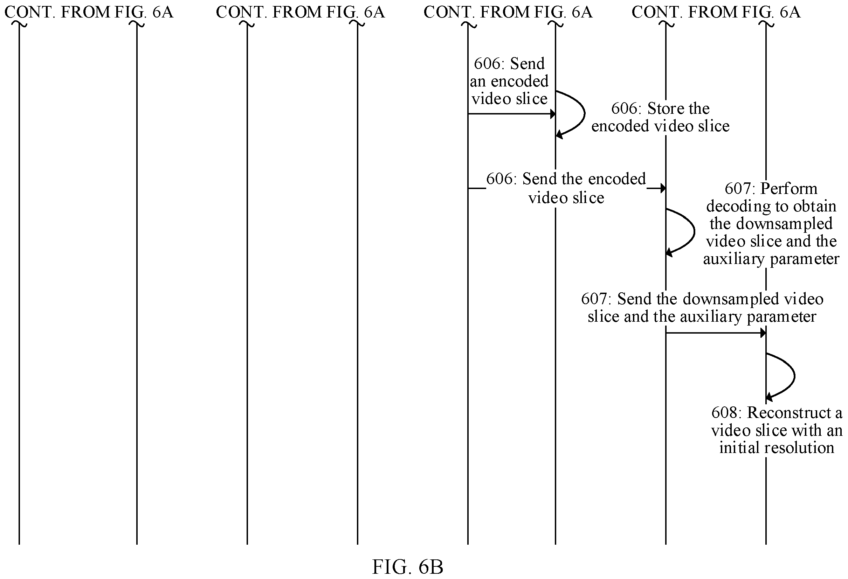

As shown in FIG. 6A and FIG. 6B, an embodiment of the present invention provides a video processing method. The method may be applied to a network architecture shown in FIG. 2. The method includes the following steps.

Step 601: A machine learning module of a video encoding apparatus performs training by using a sample video slice and a specified classification result, to obtain a trained model parameter.

A transceiver of the video encoding apparatus receives the sample video slice and the specified classification result, and sends the sample video slice and the specified classification result to the machine learning module. The specified classification result is a classification result given in advance for the sample video slice, and may be given by an expert based on experience. It should be noted that: if the classification result given in advance is specifically a class of a sample video, for example, class I, class II, or class III, a classification result subsequently obtained through training in each phase is also a class of the video slice, and the video encoding apparatus may determine an adaptive sampling resolution of the video slice based on the class of the video slice; or if the classification result given in advance is specifically an adaptive sampling resolution of a sample video, for example, class I, class II, or class III, a classification result subsequently obtained through training in each phase is also an adaptive sampling resolution of the video slice. The machine learning module trains the sample video slice based on an initial model parameter, to obtain a classification result of first training. The machine learning module trains the classification result of the first training and the specified classification result, to obtain a model parameter of the first training. Then the machine learning module trains the sample video slice based on the model parameter after the first training, to obtain a classification result of second training. The machine learning module trains the classification result of the second training and the specified classification result, to obtain a model parameter of the second training. By analogy, the foregoing process is repeated, until a classification result of an $N^{th}$ training is the same as the specified classification result or a difference between a classification result of an $N^{th}$ training and the specified classification result reaches a preset value. In this case, a model parameter of the $N^{th}$ training is a trained model parameter. The trained model parameter may be used in a subsequent process of training a video slice. A training process of the model parameter is optionally. For example, when training a video file, the machine learning module may use already trained model parameter.

A specific example is used for description. The machine learning module receives a video slice. A most suitable sampling resolution that can be manually marked for the video slice. Taking a 4KP30 movie video "Avatar", actually to be processed as an example, segments in the video are simply divided into a dynamic fighting scene a, and a static-oriented scene b with relatively few picture changes. The video may be viewed by human, to select several representative type-a and type-b segments as training samples. To supply sufficient data, usually at least 10 segments of each type are selected. These segments are input into an RVC system for training. Different sampling resolutions are tried in a machine learning apparatus, and a video output by a processing module is observed to obtain a difference between subjective quality of the video and that of an input segment. If there is hardly any quality difference that can be felt by human eyes, a resolution in this case is used as a sampling resolution. For example, a most suitable sampling resolution of the type-a segment of the 4KP30 movie video "Avatar" may maintain 2K, but a most suitable sampling resolution of the type-b segment may be reduced to 1080P. A detailed process is to be further described in subsequent content.

Step 602: A transceiver of the video encoding apparatus receives original video content sent by a remote apparatus, and the transceiver sends the original video content to the machine learning module, where the original video content may be an original video file or an original video stream, and either the video file or the original video stream may exist in a form of a video slice. One video file or one video stream may include a plurality of video slices. A subsequent process (including 602 to 608) is described by using an example in which one video slice is processed.

The machine learning module trains a first video slice based on a trained model parameter, to obtain a trained classification result. The classification result may be a video type of the first video slice. Alternatively, the classification result may be an adaptive sampling resolution of the first video slice. If the classification result is a type of the first video slice, the machine learning module may further determine an adaptive sampling resolution of the first video slice based on the type of the first video slice. The adaptive sampling resolution is a sampling resolution of the video encoding apparatus for a video file. For different types of video slices, different sampling resolutions may be used. The adaptive sampling resolution is lower than an initial resolution. The following provides a description by using the video slice as an example. There may be a plurality of video slices, and the video slices and resolutions in different phases are labeled to distinguish between different video slices, and adaptive solutions, initial resolutions, and subsequently restored video slices, sampled video slices, encapsulated video files, restored video slices, or reconstructed video slices, which are corresponding to the different video slices. Video slices with a same reference sign are video slices and video slices of a same original video slice in different phases, and resolutions of a same reference sign as that of the original video slice are the resolutions of the original video slice in different phases. For example, if a reference sign of an original video slice is 2, an original video slice is $x^2$, a sampled video slice is $x^{2'}$, a restored video slice is $x^{2''}$, an encapsulated video file is $x^{2'''}$, a restored video slice is $x^{2''''}$, or an adaptive resolution is $y^2$.

For example, the machine learning apparatus may perform machine learning training on a video slice, to obtain a type corresponding to the video slice through training, and determine a sampling resolution corresponding to the video slice based on different types of video slices. For example, division may be performed based on scenes of video slices. For a video slice in a static scene, or in a case in which a scene does not change greatly, it may be considered that the video slice is a class I slice. For a video slice in a dynamic scene, the video slice may be classified as a class II slice. For a video slice having both a static scene and a dynamic video scene, the video slice may be classified as a class III slice. Then different sampling resolutions are determined for different types of video slices. For example, for the class I slice, a resolution of 720p is used. For the class II slice, a resolution of 2k is used. For a class III slice, a resolution of 1080P is used.

For slices in different scenes, different specified sampling resolutions may be adaptively used. Therefore, a bandwidth consumed in a transmission process of a video stream can be reduced, and it can also be ensured that the video stream can be restored as much as possible when the slices are reconstructed on a client side.

Step 603: A sampling module performs sampling processing on an original video slice based on a predicted adaptive sampling resolution, to obtain a sampled video slice. The sampling module may send the original video slice and the sampled video slice to an auxiliary parameter generation module.

Step 604: The auxiliary parameter generation module calculates a plurality of pieces of auxiliary information with reference to the original video slice and the sampled video slice, and obtains an auxiliary parameter, where the auxiliary parameter includes the plurality of pieces of auxiliary information and the adaptive sampling resolution.

The auxiliary parameter generation module first restores the sampled video slice to a video slice with the initial resolution, to obtain a restored video slice; then perfors a substraction operation between a corresponding image of the restored video slice and each image of the original video slice, to obtain each subtraction difference, where the difference is a residual image, and a reference sign of each image of the original video slice is the same as that of each image of the corresponding restored video slice; and then performs encoding processing on each residual image, to obtain auxiliary information of each residual image, in other words, the auxiliary information may alternatively be content of a difference between the image of the original video slice and the image of the corresponding restored video slice.

For example, after being processed by the machine learning module in the video encoding apparatus, an input video A is sampled, to obtain a video B with a lower resolution. The original video A is compared with the sampled video B, and auxiliary information with low distortion is calculated. A simplest manner of calculating the auxiliary information is to restore a resolution of each frame image b in the video B to the initial resolution in an interpolation manner, to obtain each frame image c, then perform a substraction operation between c and a corresponding frame image in the original video A, to obtain a residual video image d, where the residual video image d may include a large quantity of consecutive zeros, then add a most suitable sampling resolution corresponding to the image b to the end of d, and use a simple entropy coding algorithm, to obtain auxiliary information with a very high compression ratio but relatively low distortion.

Step 605: The transceiver sends the sampled video slice and the auxiliary parameter to an encoder, to be encoded and encapsulated by the encoder. The encoder may add the auxiliary parameter to an encapsulated video slice. For example, the auxiliary parameter is carried in an additional field in an encoded video slice.

For ease of description, in this embodiment of the present invention, one video slice is used as an example to describe the encoding and encapsulation process of the encoder. In other words, the encoder separately encodes and encapsulates each video slice. In this embodiment of the present invention, the encoder may further encode and encapsulate a plurality of video slices or all video slices included in one piece of video content at a time, and a specific encoding or encapsulation process is the same as the process of encoding or encapsulating one video slice.

Step 606: The encoder sends an encapsulated video slice to a storage apparatus through a network, and the storage apparatus stores the video slice, or sends an encoded video slice to a terminal-side decoder through a network.

Step 607: After receiving the encapsulated video slice, the decoder decodes the video slice, to obtain the sampled video slice and the auxiliary parameter, and sends the sampled video slice and the auxiliary parameter to a video decoding apparatus for processing.

The decoder may obtain the encoded video slice from the storage apparatus, or may obtain the encoded video slice from the encoder through the network.

Step 608: The video decoding apparatus receives the sampled video slice and the auxiliary parameter, and reconstructs a video slice with an initial resolution based on the sampled video slice and the auxiliary parameter.

The video decoding apparatus performs decoding processing on the auxiliary information of each residual image, to restore each residual image; obtains the initial resolution based on each residual image; and then reconstructs each image of the fifth video slice as an image with the initial resolution based on each residual image and the adaptive sampling resolution through interpolation calculation.

In this embodiment of the present invention, there may be a plurality of manners of reconstructing a video slice with the initial resolution, for example, a difference addition method, a sparse encoding reconstruction method, or a machine learning method corresponding to a sampling method. Because the auxiliary information includes an adaptive sampling resolution of each frame image, in a reconstruction process, original-resolution video information may be accurately restored by using the auxiliary information in combination with corresponding low-resolution video information. While maintaining subjective video quality unchanged, this embodiment of the present invention avoids a bit rate waste in the prior art caused by use of a fixed sampling resolution for videos with a same resolution, or avoids that in the prior art slice sources are selected and classified by human and that a fixed resolution is used for slices of a same class, which are time consuming and laborious, hindering automation.

For example, two frames of images a and b in an original 4KP30 video are trained by the machine learning module, to obtain a corresponding an image c with an adaptive sampling resolution of 2K and a corresponding image d with an adaptive sampling resolution of 1080P. The sampling module uses a simplest difference subtraction manner to obtain residual images e and f, adaptive resolution information is added, and then entropy coding is performed, to generate auxiliary information. Then inverse entropy coding is performed based on the auxiliary information, to restore the residual images e and f and most suitable sampling resolutions of the residual images e and f. Then a difference addition operation is performed. To be specific, the images c and d are upsampled to a resolution of 4K based on respective most suitable sampling resolutions in an interpolation manner, and are then added with the residual images e and f respectively, to approximately restore the images a and b.

A machine learning model may also be referred to as a machine learning algorithm. There are a plurality of machine learning models, for example, a CNN, or a color histogram feature with reference to a K-nearest neighbor (K-Nearest Neighbor, KNN for short) classifier. The following further describes steps of the foregoing video reconstruction method by using an example in which the machine learning algorithm is the CNN. For step 301, the process may specifically include the following steps.

a. Construct a training sample set. The CNN module may select different types of slice sources (currently, a slice source may be classified as an animation class, a static class, and a dynamic class, or class I, class II, and class III) in an actual service, and then divide the slice source into a plurality of video slices. A division rule may be a particular time interval, an image quantity interval, or a file block capacity. These video slices are sample video slices. Then most suitable sampling resolutions are manually marked for these video slices. These different sampling resolutions are the specified classification result. In this way, the training sample set is constructed. In other words, in this example, the classification result is directly the adaptive sampling resolution. If the classification result is a video slice type, the process is also similar.

For example, a process of simply and rapidly marking a most suitable sampling resolution for a video slice is as follows: Video slices obtained by dividing different types of slice sources (an animation type, a static type, and a dynamic type) with a particular resolution are further manually classified into three types, namely, static-prone, dynamic-prone, and hybrid. Sampling resolutions are manually set for different types of video slices directly based on experience. In this case, a final result is that each different video slice is marked with a most suitable sampling resolution.

Although different slice sources are classified into three types, namely, static-prone, dynamic-prone, and hybrid, a static-type slice source may include a dynamic scene. For example, an indoor talk show is generally classified as the static type, but there are also some dynamic scenes. Similarly, a dynamic-type slice source, for example, an actual movie "Avatar", also includes some static scenes. Actually, when a slice source is divided based on video slices, all slices obtained through division cannot happen to be static-prone or dynamic. Therefore, three types, namely, static-prone, dynamic-prone, and hybrid of the two are obtained. Table 1 shows an example of a classification result of adaptive sampling resolutions marked for different types of video slices.

**Table 1**

| Video resolution | Slice source type | Slice type | Adaptive sampling resolution |
|---|---|---|---|
| 4K | Animation | Static-prone | 720P |
| | | Dynamic-prone | 1080P |
| | | Hybrid | 1080P |
| | Static type | Static-prone | 720P |
| | | Dynamic-prone | 1080P |
| | | Hybrid | 1080P |
| | Dynamic type | Static-prone | 1080P |
| | | Dynamic-prone | 2K |
| | | Hybrid | 2K |
| 1080P | Animation | Static-prone | 480P |
| | | Dynamic-prone | 540P |
| | | Hybrid | 540P |
| | Static type | Static-prone | 480P |
| | | Dynamic-prone | 540P |
| | | Hybrid | 540P |
| | Dynamic type | Static-prone | 540P |
| | | Dynamic-prone | 720P |
| | | Hybrid | 720P |

As shown in Table 1, a sampling resolution of a 4K dynamic-type static-prone video slice is directly manually marked as 1080P, in other words, the sampling resolution is 1080P; and sampling resolutions of 4K dynamic-type dynamic-prone video slices and hybrid-type video slices are directly manually marked as 2K, in other words, the sampling resolution is marked as 2K.

b. Specific training process

b1. Construct an input sample set. Each video slice in the training sample set includes a particular quantity of YUV images, and images are extracted at a particular quantity of intervals. These YUV images are horizontally or vertically spliced into one large YUV image. For example, if each video slice includes 30 images, and an extraction interval is 10, three images are obtained, and these images are horizontally or vertically spliced into one large image. The large YUV image is then scaled to a size suitable for input into the CNN module. The large image corresponding to each video slice in the training sample set and a corresponding manually marked sampling resolution form a final input sample. It is assumed that an image of a size that is of a large image corresponding to a video slice in the training sample set and that is scaled to be suitable for input into the CNN module is x, and y is used to represent a type of a manually marked sampling resolution corresponding to the video slice. In this case, an input sample including the video slice may be represented as (x, y). If there are m video slices in total in the training sample set, a set of m finally obtained input sample may be represented as: $\{(x^1, y^1), (x^2, y^2), ..., (x^m, y^m)\}$.

b2. Construct a network structure of the CNN module. The network structure of the CNN module may be freely combined based on an experimental effect, but include at least one convolutional layer and pooling layer. A plurality of layers are convolved and pooled, and are connected to the fully connected layer, and then connected to the softmax layer. There are one or more convolution layers, pooling layers, and fully connected layers. For example, a network structure of a CNN module includes five convolution layers, three pooling layers (a first convolutional layer, a second convolutional layer, and a fifth convolutional layer are closely followed by a pooling layer), and three fully connected layers, and is finally connected to the softmax layer. To improve a calculation speed and improve efficiency, calculation of the convolution layers, the pooling layers, and the fully connected layers may be distributed on two GPUs. Assuming that a size of an input image is scaled to 224×224 and divided into three color channels of Y, U, and V, the input image is connected to the first convolution layer, this layer includes 96 11×11 convolution kernels, and 48 convolution kernels are allocated to each GPU. The first convolution layer is immediately followed by a max pooling layer, and a pooling window size is 2×2. Then the layer is connected to the second convolution layer, the second convolution layer includes a total of 256 5×5 convolution kernels, and 128 convolution kernels are allocated to each GPU. The second convolution layer is immediately followed by a max pooling layer, and a pooling window size is 2×2. Then the layer is connected to the third convolution layer, the third convolution layer includes a total of 384 3×3 convolution kernels, and 192 convolution kernels are allocated to each GPU. Then the layer is directly connected to the fourth convolution layer, the fourth convolution layer also includes a total of 384 3×3 convolution kernels, and 192 convolution kernels are allocated to each GPU. Then the layer is directly connected to the fifth convolution layer, the fifth convolution layer also includes a total of 256 3×3 convolution kernels, and 128 convolution kernels are allocated to each GPU. The fifth convolution layer is immediately followed by a max pooling layer, and a pooling window size is 2×2. Then the layer is connected to a fully connected layer including 4096 nodes (in other words, 4096 dimensions of column vectors), and 2048 nodes are allocated to each GPU. Then the layer is connected to the second fully connected layer, the second fully connected layer also includes a total of 4096 nodes (in other words, 4096 dimensions of column vectors), and 2048 nodes are allocated to each GPU. Then the layer is connected to the third fully connected layer. In the third fully connected layer, a node quantity n remains consistent with a classification quantity. It is assumed that there are a total of five types of sampling resolutions. In this case, at the third fully connected layer, the node quantity n is equal to 5, and nodes at the third fully connected layer are distributed on one of the GPUs. Finally, the third fully connected layer is connected to the softmax classifier. An output of the softmax is n dimensions (which remain consistent with the type quantity the sampling resolution) of column vectors, and each output dimension is a probability that an input image belongs to the type.

b3. Initialize a model parameter of the CNN module. There are two types of model parameters of the CNN module. One type is preset, and includes a convolution kernel quantity of each convolutional layer, and the pooling layer uses average pooling or max pooling. For example, the max pooling is used in the foregoing example. The other type of model parameter needs to be obtained through training, and includes parameters of the convolutional layer, the pooling layer, and the fully connected layer. A specific process is the same as the foregoing process of training the parameters of the convolutional layer, the pooling layer, and the fully connected layer that are included in the CNN, and the following example of parameter training in b4.

b4. Train the model parameter. The CNN module sequentially inputs samples in the input sample set $\{(x^1, y^1), (x^2, y^2), ..., (x^m, y^m)\}$ into the constructed CNN module for which the parameters are already initialized, and an initial actual output (an initialized classification result) is obtained through calculation. It is assumed that the CNN module includes a total of n layers (these n layers include a convolutional layer, a pooling layer, and a fully connected layer), a first layer parameter is represented as W1, a first layer bias is represented as b1, parameters of all the n layers are represented by using W, and biases of all the n layers are is represented by using b. In this case, an actual output of an $i^{th}$ input sample $(x^i, y^i)$ may be represented as a function related to W and b, namely, $f_{W,b}(x^i)$. A difference between types $y^i$ to which adaptive sampling resolutions of the actual output and marked $x^i$ may be represented by using a cost function:

$$J(W,b;x^i,y^i)=\frac{1}{2}(f_{W,b}(x^i)-y^i)^2 \quad (18)$$

For all the m input samples, an overall cost function is defined as an average value of cost functions of all the m samples, namely:

$$J(W,b)=\frac{1}{m}\sum_{i=1}^{m}J(W,b;x^i,y^i)=\frac{1}{m}\sum_{i=1}^{m}(\frac{1}{2}(f_{W,b}(x^i)-y^i)^2) \quad (19)$$

Then optimal parameters W and b are determined to obtain a minimum value of $J(W, b)$. The optimal parameters W and b may be determined in the following process:

First, a first-layer parameter is represented as $W^l$, an $l^{th}$-layer bias is represented as $b^l$, and a partial derivative thereof is calculated as:

$$\frac{\partial}{\partial W^l}J(W,b) \text{ and } \frac{\partial}{\partial b^l}J(W,b) \quad (20)$$

Then, $W^l$ and $b^l$ are updated by using the partial derivative:

$$W^l = W^l - \alpha\frac{\partial}{\partial W^l}J(W,b) \quad (21)$$

$$b^l = b^l - \alpha\frac{\partial}{\partial b^l}J(W,b) \quad (22)$$

where $\alpha$ is referred to as a learning rate, a value range is usually [0.01, 0.1], and is a relatively small real number. A partial derivative of the cost function $J(W, b)$ for a parameter of each layer is then calculated through back propagation (Back propagation, BP). A BP algorithm is to back propagate error information from the last layer to the first layer, and adjustment is performed layer by layer, until a termination condition is met. A specific process is as follows:

The input sample ($x^i$, $y^i$) in the training set is input into the constructed CNN module for which the parameters are already initialized, for forward layer-by-layer calculation, to obtain an initial actual output $f_{W,b}(x^i)$. A difference, namely, the cost function $J(W, b; x^i, y^i)$, between $f_{W,b}(x^i)$ and the type yi to which the adaptive sampling resolution of $x^i$ belongs is calculated. Because a result of the cost function is obtained, a partial derivative of the last layer, namely, a residual of the last layer, can be obtained through calculation based on formula (19), and a weighting parameter and a bias parameter of the last layer are updated based on formula (20) and formula (21). Then, the residual is transferred to the penultimate layer, a partial derivative of the penultimate layer is further calculated based on formula (19), and the weighting parameter and the bias parameter of the last layer are updated based on formula (20) and formula (21); and so on, until a partial derivative of the first layer is calculated, and a weighting parameter and a bias parameter of the first layer are updated. In this way, an overall iteration of the parameters W and b is completed.

The foregoing steps are repeated, so that the cost function $J(W, b; x^i,y^i)$ is gradually reduced. If the cost function in this case is less than a preset small value (for example, 0.001), the iterative update process is terminated, and a parameter after the iterative update is used as a currently optimal parameter of the entire CNN Alternatively, if a quantity of repeated update times reaches a preset maximum iteration quantity, the iterative update operation is also terminated, and a parameter obtained in the last iteration is used as a currently optimal parameter of the entire CNN. Remaining input samples in the training set are sequentially input into the CNN module, the weighting parameter and the bias parameter of each layer in the CNN are calculated and updated based on steps a to c, and after all the m input samples are trained, a final optimal weighting parameter and a final optimal bias parameter of the CNN module are obtained.

For step 602, the process may specifically include the following steps.

a. For a to-be-predicted video slice, similar to constructing the input sample set in the training process, extract images at a particular quantity of intervals. Horizontally or vertically splice these images into a large image, and scale the large image to a size suitable for input into the CNN module, in other words, obtain an image x. Input the image x into the CNN module for which the model parameter is already trained.

b. Perform a multi-layer convolution and pooling operation on the image x based on a specified CNN network structure on the CNN module for which the weighting parameter and the bias parameter of each layer are already trained, and connect the network structure to a fully connected layer, input the image x into a softmax classifier, and calculate a final predictive value f(x) of the image x.

c. A type of sampling resolution to which the predictive value f(x) belongs with a greatest probability is used as a final sampling resolution of the to-be-predicted video slice corresponding to x. Examples are listed as follows:

It is assumed that there are a total of five types of sampling resolutions: 480P, 540P, 720P, 1080P, and 2K, which respectively correspond to class 1, class 2, class 3, class 4, and class 5. A softmax output is in a form of a 5-dimensional column vector. For the input sample ($x^i$, $y^i$) in the training set, if yi is marked as belonging to the class-3 sampling resolution, the softmax output is expected to be [0, 0, 1, 0, 0]. In other words, a value of the third element in the column vector is 1, and a value of each of the remaining elements is 0. For a to-be-predicted sample, after x passes through the softmax, if the final predictive value f(x) is [0.1, 0.2, 0.6, 0.03, 0.07], and the value of the third element thereof is the largest, in other words, the predictive value f(x) belongs to the class-3 sampling resolution with the greatest probability, the class-3 sampling resolution 720P is used as the final sampling resolution of the video slice.

A specific process of step 603 is as follows:

After a video slice $x^i$ with a reference sign i is trained, an adaptive sampling resolution $y^i$ of the video slice $x^i$ is obtained. The CNN module sends the video slice $x^i$ and the adaptive sampling resolution $y^i$ to the sampling module. Before the sending, the CNN module determines whether the reference signs i of $x^i$ and $y^i$ are consistent, and if the reference signs are inconsistent, it indicates that the video slice $x^i$ and the adaptive sampling resolution $y^i$ do not correspond to a same video slice, and no processing is performed.

After step 302 is performed on the video slice $x^i$ with the reference sign i, an adaptive sampling resolution $y^i$ of the video slice $x^i$ is obtained. It is assumed that x includes a total of n images with reference signs 1 to n. The n images are sampled in ascending order of the reference signs. A resolution of the n images is changed to $y^i$. The n sampled images constitute a sampled video slice $x^{i'}$ with a low resolution.

The sampling operation herein may include: if a length and a width of an image I are respectively M and N, and a length and a width of a sampling resolution yi are M' and N', changing an image of each (M/M')×(N/N') rectangular window in the image I into a pixel, where a value of the pixel is an average value of all pixels in the rectangular window, and a resolution of a finally obtained image I' is $y^1$.

A specific process of step 604 may be as follows:

The sampling module sends the video slice $x^i$, the corresponding adaptive sampling resolution $y^i$, and the sampled video slice $x^{i'}$ with the lowered resolution to an auxiliary information generation module. Before the sending, the sampling module determines whether reference signs i of the video slice $x^i$, the adaptive sampling resolution $y^i$, and the sampled video slice $x^{i'}$ are consistent. If the reference signs i are inconsistent, it indicates that the three do not correspond to a same video slice, and no processing is performed. If the reference signs i are consistent, auxiliary information is calculated. A process of calculating auxiliary information, to obtain an auxiliary parameter includes the following steps:

a. The sampled video slice $x^{i'}$ includes a total of n images with reference signs 1 to n and with an adaptive resolution of $y^i$. The resolution of the n images is sequentially restored from $y^i$ to the resolution of the image in the original video slice by using a bilinear interpolation method, to obtain a restored video slice $x^{i''}$.
b. Perform a substraction operation between images with the same reference signs in the restored video slice $x^{i''}$ and those in the original video slice $x^i$ in an order of the reference signs from 1 to n, to obtain a total of n residual images with the reference signs 1 to n.
c. Perform encoding processing on the n residual images in the order of the reference signs, where the encoding processing includes one or more of predictive coding, transform coding, quantization, and entropy encoding processing, and a result after the encoding is auxiliary information.
d. Add $y^i$ to the end of the auxiliary information, to obtain a final auxiliary parameter. In other words, the auxiliary parameter of the original video slice $x^i$ includes two parts: one part is the auxiliary information, and the other part is the adaptive sampling resolution $y^i$ corresponding to the original video slice $x^i$.

A specific process of step 605 is as follows:
Processes in which the encoder encodes the sampled video slice $x^{i'}$ and the corresponding auxiliary parameter after receiving the sampled video slice $x^{i'}$ and the corresponding auxiliary parameter may be performed together, including the following steps:

a. The encoder reads the adaptive sampling resolution $y^i$ in the auxiliary parameter, and uses the suitable sampling resolution $y^i$ as an encoding parameter of the sampled video slice $x^{i'}$ with the lowered resolution.
b. The encoder sequentially performs predictive coding, transform coding, quantization, and entropy coding on the sampled video slice $x^{i'}$ based on the encoding parameter, to form a binary bitstream file.
c. The encoder encapsulates the binary bitstream file, and writes the auxiliary parameter as additional information into a blank field in an encapsulation format. In this process, the auxiliary parameter is encoded, and the file formed after the encapsulation is denoted as $x^{i'''}$. Specifically, an H.265 codec standard is used as an example. H.265 includes a network abstract layer (Network Abstract Layer, NAL), and a main task is to encapsulate the binary bitstream file formed after the encoding, and perform necessary identification, so that it can better adapt to a complex and varied network environment. The NAL includes a total of 63 fields, the first 47 fields describe encapsulation information of the binary bitstream file, and the forty-eighth to the sixty-third fields are all blank fields. When the H.265 coded standard is used, after the binary bitstream file obtained after encoding the sampled video slice $x^{i'}$ is encapsulated, one of the forty-eighth to the sixty-third fields is selected, and the auxiliary parameter is written into the field. In this way, the auxiliary parameter is encoded, and an encapsulated video file is denoted as $x^{i'''}$.

From the encoding process, the sampled video slice $x^{i'}$ is encoded to form the binary bitstream file, the corresponding auxiliary parameter is written into the empty field for encapsulating the binary bitstream file, and the sampled video slice $x^{i'}$ and the corresponding auxiliary parameter are bound together, to form the encapsulated video file $x^{i'''}$.

A specific process of step 607 is as follows:
The decoder receives the encapsulated video file $x^{i'''}$, and decodes the encapsulated video file $x^{i'''}$. A specific decoding process is as follows:

a. The decoder decapsulates the encapsulated video file $x^{i'''}$, to obtain the binary bitstream file and the auxiliary parameter. The H.265 codec standard is used as an example. The first 47 fields of the NAL are read sequentially and parsed to obtain the binary bitstream file. Then the forty-eighth to the sixty-third fields are sequentially read. If one of the forty-eighth to the sixty-third fields is not a blank empty field, the field stores the auxiliary parameter and is directly read, to obtain the auxiliary parameter.
b. Perform inverse entropy coding, dequantization, inverse transformation encoding, and inverse predictive transformation operations on the binary bitstream file, to restore the sampled video slice $x^{i'}$.

Because in the encoding process, the sampled video slice $x^{i'}$ and the auxiliary parameter of the video slice $x^i$ are bound together, the sampled video slice $x^{i'}$ and the auxiliary parameter of the video slice $x^i$ that are decoded by the decoder correspond to each other.
A specific process of step 608 may be as follows:

a. The video decoding apparatus obtains the adaptive sampling resolution $y^i$ in the auxiliary parameter.
b. The video decoding apparatus obtains the auxiliary information in the auxiliary parameter, and sequentially performs decoding processing on the auxiliary information, where the decoding processing includes one or more of inverse entropy coding, dequantization, inverse transformation encoding, and inverse predictive coding, to obtain a residual image of a total of n images with the reference signs from 1 to n in the video slice $x^i$.
c. The video decoding apparatus obtains a width W and a height H of the residual image, to obtain an image resolution $Y = W \times H$, where a resolution of each image in the video slice $x^i$ is Y.
d. The sampled video slice $x^{i'}$ includes a total of n images with the reference signs from 1 to n, and resolutions of the n images are all the adaptive sampling resolution $y^i$. The video decoding apparatus changes the resolution of each image in $x^{i'}$ from $y^i$ to Y in an order from 1 to n by using a bilinear interpolation method, and the n restored images constitute the restored video slice $x^{i''''}$.
e. The video decoding apparatus adds the images with the same reference signs in the restored video slice $x^{i''''}$ and the residual image in the order from 1 to n, to obtain a reconstructed image, for example, adds an image with a reference sign j in the restored video slice $x^{i'''}$ and the residual image, to obtain a reconstructed image with the reference sign j. The n reconstructed images that are sequentially processed constitute the reconstructed video slice with the initial resolution Y.

For example, the process of 308 is described by using an original video slice $x^i$ that has an initial resolution of 4K and that includes a total of 100 images with reference signs 1 to 100 as an example. It is assumed that an adaptive sampling resolution of the original video slice $x^i$ is 2K. In this case, a resolution of a sampled video slice $x^{i'}$ is 2K, and the sampled video slice $x^{i'}$ also includes a total of 100 images with reference signs 1 to 100.
The video decoding apparatus first obtains the adaptive sampling resolution 2K in the auxiliary parameter and the auxiliary information in the auxiliary parameter. The video decoding apparatus sequentially performs inverse entropy coding, dequantization, inverse transformation encoding, and inverse predictive coding on the auxiliary information, to obtain a residual image of the 100 images in total with the reference signs 1 to 100 in the video slice $x^i$.
The video decoding apparatus first obtains a width W and a height H of the residual image of the 100 images, to obtain an image resolution $Y = W \times H$. Assuming that Y is 4K herein, a resolution of each image in the video slice $x^i$ is 4K.
In the order from 1 to 100, the video decoding apparatus restores the resolution of each image in the sampled video slice $x^{i'}$ from 2K to 4K by using the bilinear interpolation method. The 100 images constitute the restored video slice $x^{i''''}$.
Then, in the order from 1 to 100, the video decoding apparatus adds an image signin the restored video slice $x^{i''''}$ and an image in a residual image set to obtain a finally reconstructed image, where the images have a same reference sign. For example, the video decoding apparatus adds an image with a reference sign 50 in the restored video slice $x^{i'''}$ and a residual image with the reference sign 50, to obtain a reconstructed image with the reference sign 50, and so on. The 100 reconstructed images are sequentially processed from 1 to 100 to form a reconstructed video slice with a resolution of 4K.
According to the video encoding method in this embodiment of the present invention, a reconstructed video has a video bit rate at least 5% lower than that in a conventional RVC video reconstruction method while maintaining subjective quality of the video. In addition, the video encoding method also avoids a bit rate waste in the conventional RVC solution caused by use of a fixed sampling resolution for videos with a same resolution, or avoids that in the prior art slice sources are selected and classified by human and that a fixed sampling resolution is used for slices of a same class, which are time consuming and laborious, hindering automation.

It should be noted that, "first", "second", "third", "fourth", "fifth", or "sixth" in this application is not a sequence or an order, but is merely a code name. For example, "first" or "second" in the first video slice and the second video slice is merely used to distinguish between different video slices. A person skilled in the art should understand that the embodiments of this application may be provided as a method, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction device. The instruction device implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, a person skilled in the art can make various modifications and variations to this application without departing from the spirit and scope of this application. This application is intended to cover these modifications and variations of this application provided that they fall within the scope of the claims of this application and their equivalent technologies.

## Claims

**1.** A video processing method, comprising:

receiving a first video slice, wherein a resolution of the first video slice is an initial resolution;
obtaining an adaptive sampling resolution of the first video slice based on a model parameter of a machine learning model by using the machine learning model;
sampling the first video slice based on the adaptive sampling resolution, to obtain a second video slice;
obtaining an auxiliary parameter based on the first video slice and the second video slice, wherein the auxiliary parameter comprises the adaptive sampling resolution of the first video slice;
performing encoding processing on the second video slice and the auxiliary parameter, to form a third video slice; and
sending the third video slice to a video decoding apparatus.

**2.** The method according to claim 1, wherein the predicting an adaptive sampling resolution of the first video slice based on a model parameter of a machine learning model by using the machine learning model specifically comprises:

training the first video slice based on the model parameter of the machine learning model by using the machine learning model, to obtain a trained classification result, wherein the classification result is the adaptive sampling resolution of the first video slice; or
training the first video slice based on the model parameter of the machine learning model by using the machine learning model, to obtain a trained classification result, wherein the classification result is a predicted video slice type, and determining the adaptive sampling resolution of the first video slice based on the video slice type.

**3.** The method according to claim 1, wherein the obtaining an auxiliary parameter based on the first video slice and the second video slice specifically comprises:

restoring a resolution of the second video slice to the initial resolution, to obtain a fourth video slice;
performing a substraction operation between an image of the fourth video slice and an image of the first video slice, to obtain a subtraction difference, wherein the difference is a residual image; and
performing encoding processing on each of the residual images, to obtain auxiliary information of each of the residual images, wherein the auxiliary parameter further comprises auxiliary information of the residual images.

**4.** The method according to claim 1, further comprising:

receiving a sample video slice and a specified classification result of the sample video slice;
training the sample video slice based on an initial model parameter by using a machine learning model, to obtain a trained classification result of the sample video slice; and
obtaining the model parameter of the machine learning model by using the trained classification result of the sample video slice and the specified classification result of the sample video slice.

**5.** A video processing method, comprising:

receiving a third video slice, wherein the third video slice comprises an adaptive sampling resolution;
decoding the third video slice, to obtain a fifth video slice and an auxiliary parameter, wherein a resolution of the fifth video slice is the adaptive sampling resolution, and the auxiliary parameter comprises the adaptive sampling resolution; and
reconstructing the fifth video slice based on the auxiliary parameter, to obtain a sixth video slice, wherein a resolution of the sixth video slice is an initial resolution.

**6.** The method according to claim 5, wherein the auxiliary parameter further comprises auxiliary information of each residual image; and
the reconstructing the fifth video slice based on the auxiliary parameter, to obtain a sixth video slice specifically comprises:

performing decoding processing on the auxiliary information of each residual image, to restore each residual image;
obtaining the initial resolution based on each residual image; and
reconstructing each image of the fifth video slice as an image with the initial resolution based on each residual image, the initial resolution, and the adaptive sampling resolution through interpolation calculation, wherein all the reconstructed images with the initial resolution constitute the sixth video slice.

**7.** A video processing apparatus, comprising:

a transceiver, configured to receive a first video slice, wherein a resolution of the first video slice is an initial resolution;
the machine learning module, configured to obtain an adaptive sampling resolution of the first video slice based on a model parameter of a machine learning model by using the machine learning model;
a sampling module, configured to sample the first video slice based on the adaptive sampling resolution, to obtain a second video slice;
the auxiliary parameter generation module, configured to obtain an auxiliary parameter based on the first video slice and the second video slice, wherein the auxiliary parameter comprises the adaptive sampling resolution of the first video slice; and
an encoder, configured to perform encoding processing on the second video slice and the auxiliary parameter, to form a third video slice, wherein
the transceiver is further configured to send the third video slice to a video decoding apparatus.

**8.** The video encoding apparatus according to claim 7, wherein the machine learning module is specifically configured to train the first video slice based on the model parameter of the machine learning model by using the machine learning model, to obtain a trained classification result, wherein the classification result is the adaptive sampling resolution of the first video slice; or
train the first video slice based on the model parameter of the machine learning model by using the machine learning model, to obtain a trained classification result, wherein the classification result is a predicted video slice type, and determine the adaptive sampling resolution of the first video slice based on the video slice type.

**9.** The video encoding apparatus according to claim 7, wherein the auxiliary parameter generation module is specifically configured to restore a resolution of the second video slice to the initial resolution, to obtain a fourth video slice;
perform a substraction operation between a corresponding image of the fourth video slice and each image of the first video slice, to obtain a subtraction difference, wherein the difference is a residual image, and a reference sign of each image of the first video slice is the same as a reference sign of each corresponding image of the fourth video slice; and
perform encoding processing on each of the residual images, to obtain auxiliary information of each of the residual images, wherein the auxiliary parameter further comprises auxiliary information of the residual images.

**10.** The video encoding apparatus according to claim 7, wherein the transceiver is further configured to receive a sample video slice and a specified classification result of the sample video slice; and
the machine learning module is further configured to: train the sample video slice based on an initial model parameter by using a machine learning model, to obtain a trained classification result of the sample video slice; and obtain the model parameter of the machine learning model by using the trained classification result of the sample video slice and the specified classification result of the sample video slice.

**11.** A video decoding apparatus, comprising:

a receiving unit, configured to receive a third video slice;
a decoder, configured to decode the third video slice, to obtain a fifth video slice and an auxiliary parameter, wherein a resolution of the fifth video slice is an adaptive sampling resolution, and the auxiliary parameter comprises the adaptive sampling resolution; and
a reconstruction unit, configured to reconstruct the fifth video slice based on the auxiliary parameter, to obtain a sixth video slice, wherein a resolution of the sixth video slice is an initial resolution, and the initial resolution is higher than the adaptive sampling resolution.

**12.** The video decoding apparatus according to claim 11, wherein the reconstruction unit is specifically configured to: perform decoding processing on the auxiliary information of each residual image, to restore each residual image; obtain the initial resolution based on each residual image; and reconstruct each image of the fifth video slice as an image with the initial resolution based on each residual image, the initial resolution, and the adaptive sampling resolution through interpolation calculation, wherein all the reconstructed images with the initial resolution constitute the sixth video slice.

$x_1$
$x_2$
$x_3$
+1
Layer L1
$a_1^{(2)}$
$a_2^{(2)}$
$a_3^{(2)}$
+1
Layer L2
$h_{w,b}(x)$
Layer L3

FIG. 1

Video encoding apparatus 201
Storage apparatus 202
Video decoding apparatus 203

FIG. 2

Video encoding apparatus 201
Sampling module 2013
Machine learning module 2012
Auxiliary parameter generation module 2014
Transceiver 2011
Encoder 2015
Receiving unit 2031
Decoder 2032
Reconstruction unit 2033
Video decoding apparatus 203

FIG. 3

FIG. 4

500
51
58
Processor
CPU 0
CPU 1
Processor
CPU 0
CPU 1
53
Communications bus 52
Memory
54
55
56
Communications interface
Output device
Input device

FIG. 5

Video encoding apparatus 201
Transceiver 2011
Machine learning module 2012
Sampling module 2013
Auxiliary parameter generation module 2014
Encoder 2015
Storage apparatus 202
Video decoding apparatus 203
Decoder 2032
Reconstruction unit 2033
601: Sample video slice and classification result
601: Train a model parameter
602: Original video slice
602: Predict an adaptive sampling resolution
603: Adaptive sampling resolution
603: Downsampling processing
604: Downsampled video slice
604: Obtain an auxiliary parameter
605: Send the downsampled video slice and the auxiliary parameter
605: Encode the video slice
TO FIG. 6B
TO FIG. 6B
TO FIG. 6B
TO FIG. 6B
TO FIG. 6B
TO FIG. 6B
TO FIG. 6B
TO FIG. 6B


FIG. 6A

CONT. FROM FIG. 6A
CONT. FROM FIG. 6A
CONT. FROM FIG. 6A
CONT. FROM FIG. 6A
CONT. FROM FIG. 6A
CONT. FROM FIG. 6A
606: Send an encoded video slice
606: Store the encoded video slice
606: Send the encoded video slice
607: Perform decoding to obtain the downsampled video slice and the auxiliary parameter
607: Send the downsampled video slice and the auxiliary parameter
608: Reconstruct a video slice with an initial resolution

FIG. 6B

# INTERNATIONAL SEARCH REPORT

International application No.
PCT/CN2018/083823

**A. CLASSIFICATION OF SUBJECT MATTER**

H04N 19/59 (2014.01) i

According to International Patent Classification (IPC) or to both national classification and IPC

B. FIELDS SEARCHED

Minimum documentation searched (classification system followed by classification symbols)

H04N; G06T

Documentation searched other than minimum documentation to the extent that such documents are included in the fields searched

Electronic data base consulted during the international search (name of data base and, where practicable, search terms used)

CNABS, CNTXT, CNKI, VEN, USTXT: 分辨率, 超分辨率, 下采样, 降采样, 减少, 降低, 减小, 缩减, 带宽, 机器学习, 压缩, 编码, 视频, 图像, 帧, 分类, 类型, 类别, 运动, 静止, 静态, resolution, super resolution, ultra resolution, down sampling, sampling, reduce, decrease, bandwidth, machine learning, compress, encode, video, image, frame, class, type, motion, static

C. DOCUMENTS CONSIDERED TO BE RELEVANT

| Category* | Citation of document, with indication, where appropriate, of the relevant passages | Relevant to claim No. |
|---|---|---|
| Y | CN 103607591 A (SICHUAN UNIVERSITY) 26 February 2014 (26.02.2014), description, paragraphs [0031] and [0056]-[0064], and figures 2 and 4 | 1-12 |
| Y | 何小海等. 集成超分辨率重建的图像压缩编码新型框架及其实现. 数据采集与处理. 31 January 2012 (31.01.2012), 29(01), article, p. 37, right column to p. 38, left column, line 5, and figure 1. (HE, Xiaohai et al. New Image Compression Framework with Super-Resolution Technique. Journal of Data Acquisition and Processing.) | 1-12 |
| Y | 杨永玲. 基于超分辨率重建的视频图像压缩方法的研究. 中国优秀硕士学位论文全文数据库. 31 December 2008 (31.12.2008), no. 07, thesis, chapter 4. (YANG, Yongling. Research of Video Compression Based on Super-Resolution. Chinese Master's Theses Full-text Database.) | 1-12 |

☒ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
|---|---|
| 23 May 2018 | 30 May 2018 |

| Name and mailing address of the ISA | Authorized officer |
|---|---|
| State Intellectual Property Office of the P. R. China<br>No. 6, Xitucheng Road, Jimenqiao<br>Haidian District, Beijing 100088, China<br>Facsimile No. (86-10) 62019451 | WU, Lijun<br>Telephone No. (86-10) 62411680 |

Form PCT/ISA /210 (second sheet) (July 2009)

## INTERNATIONAL SEARCH REPORT

International application No.
PCT/CN2018/083823

C (Continuation). DOCUMENTS CONSIDERED TO BE RELEVANT

| Category* | Citation of document, with indication, where appropriate, of the relevant passages | Relevant to claim No. |
|---|---|---|
| A | CN 106791927 A (FUJIAN IMPERIAL VISION TECHNOLOGY) 31 May 2017 (31.05.2017), entire document | 1-12 |
| A | US 2016163021 A1 (KING ABDULAZIZ CITY SCIENCE & TECHNOLOGY) 09 June 2016 (09.06.2016), entire document | 1-12 |
| A | WO 2016132145 A1 (MAGIC PONY TECHNOLOGY LTD. et al.) 25 August 2016 (25.08.2016), entire document | 1-12 |
| A | CN 103167284 A (CHINA TELECOM CORPORATION LIMITED) 19 June 2013 (19.06.2013), entire document | 1-12 |

Form PCT/ISA /210 (continuation of second sheet) (July 2009)

**INTERNATIONAL SEARCH REPORT**
Information on patent family members

International application No.
PCT/CN2018/083823

| Patent Documents referred in the Report | Publication Date | Patent Family | Publication Date |
|---|---|---|---|
| CN 103607591 A | 26 February 2014 | CN 103607591 B | 01 February 2017 |
| CN 106791927 A | 31 May 2017 | None | |
| US 2016163021 A1 | 09 June 2016 | US 9538126 B2 | 03 January 2017 |
| WO 2016132145 A1 | 25 August 2016 | US 2017374374 A1 | 28 December 2017 |
| | | GB 2539846 B | 01 November 2017 |
| | | EP 3259915 A1 | 27 December 2017 |
| | | GB 2539846 A | 28 December 2016 |
| | | US 2017347060 A1 | 30 November 2017 |
| | | US 2017347110 A1 | 30 November 2017 |
| | | US 2017345130 A1 | 30 November 2017 |
| | | US 2017347061 A1 | 30 November 2017 |
| | | GB 2548749 B | 13 December 2017 |
| | | GB 2548749 A | 27 September 2017 |
| CN 103167284 A | 19 June 2013 | CN 103167284 B | 11 August 2017 |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201710525977